# EUROPÄISCHE PATENTSCHRIFT

(11) **EP 0 836 721 B1**
(45) Veröffentlichungstag und Bekanntmachung des Hinweises auf die Patenterteilung: **25.08.1999**
(21) Anmeldenummer: 96922036.7
(22) Anmeldetag: 26.06.1996
(51) Int. Cl.: G06F 9/445

(54) **ANLAUFSYSTEM EINES RECHNERSYSTEMS**
START-UP SYSTEM FOR A COMPUTER SYSTEM
SYSTEME DE MISE EN MARCHE D'UN SYSTEME INFORMATIQUE

(30) Priorität: 28.06.1995 EP 95110106
(43) Veröffentlichungstag der Anmeldung: 22.04.1998
(73) Patentinhaber: SIEMENS AKTIENGESELLSCHAFT, 80333 München (DE)
(72) Erfinder: CLARK, Mark, D-81373 München (DE); DÖRFLE, Michael, D-81369 München (DE); STELZEL, Winfried, D-80689 München (DE)
(86) Internationale Anmeldenummer: EP9602795
(87) Internationale Veröffentlichungsnummer: WO9701815

(56) Entgegenhaltungen:
- EP-A- 0 321 000
- WO-A-89/12274

## Beschreibung

Beim Anlauf (Recovery) von komplexen Rechnersystemen, z.B. Vermittlungssystemen, müssen zahlreiche Prozessoren und große Mengen von Software (d.h. das Programmsystem des Rechnersystems) in Betrieb genommen werden. Da das Programmsystem eines komplexen Rechnersystems sehr kundenspezifisch ist, variiert der Anlauf von Rechnersystem zu Rechnersystem sehr stark.

Bisher werden deshalb die Anlauftabellen zur Festlegung des kundenspezifischen Anlaufs dynamisch erzeugt. Aufgrund dieser dynamischen Erzeugung ist jedoch ein Design des Anlaufs zu einem frühen Zeitpunkt nicht möglich. Darüber hinaus lassen sich die Abhängigkeiten zwischen den einzelnen Software-Teilen erst dann erkennen, wenn die Tabellen Online vollständig aufgebaut sind.

Es ist also einerseits erwünscht, eine frühzeitigere und stärkere Kontrolle über den Gesamtablauf des Anlaufs zu bekommen und andererseits den Anlauf dennoch flexibel, d.h. für die verschiedenen kundenspezifischen Anlagenprogrammsysteme variabel zu halten.

Außerdem sollte der Anlauf des gesamten Systems sicher und schnell erfolgen.

Der Erfindung liegt die Aufgabe zugrunde, die genannten Anforderungen zu erfüllen.

Diese Aufgabe wird durch ein Anlaufsystem nach Anspruch 1 und ein Verfahren zur Festlegung des Anlaufs eines Rechnersystems nach Anspruch 8 gelöst.

Durch das statische Erzeugen der Tabellen wird eine frühzeitige und enge Kontrolle über den Gesamtablauf des Anlaufs ermöglicht, sowie ein sicherer und schneller Anlauf gewährleistet.

Durch die frühzeitige Kontrollmöglichkeit können Fehler (z.B. Deadlocks) bereits vor der Online-Testphase, d.h. schon vor dem tatsächlichen Anlauf des Realzeitsystems, durch entsprechende Tools erkannt und korrigiert werden.

Dadurch daß die Anlaufbeziehungen (Anlaufinformationen) für eine Software-Komponente jeweils in derselbigen deklariert werden, wird in der statisch erzeugten Anlauftabelle (Start-Up-Tabelle) jeweils nur diejenige Software berücksichtigt, die im kundenspezifischen Programmsystem jeweils vorhanden ist.

Des weiteren wird dadurch eine feine Modularisierung des Anlaufs und damit Unabhängigkeit bzw. Flexibilität des SW-Komponenten-Pools gegenüber Änderungen und/oder Erweiterungen gefördert.

Schließlich werden durch die Deklaration der Anlaufbeziehungen in den SW-Komponenten Abhängigkeiten zwischen den Teilen der Anlauf-Software bereits vor dem eigentlichen Anlauf sichtbar, wodurch das Design des Gesamtanlaufs erleichtert wird.

Eine Ausführungsform der Erfindung ist durch Anspruch 2 angegeben. Nach dieser Ausführungsform der Erfindung liegt nach dem Compilieren einer SW-Komponente bereits eine Teil-Tabelle vor, die - über ein entsprechendes Tool sichtbar gemacht - bereits zur Designzeit kontrolliert werden kann.

Eine Ausführungsform der Erfindung ist durch Anspruch 4 angegeben. Durch diese Ausführungsform kann innerhalb der Tabellen festgelegt werden, ob eine plattformübergreifende Synchronisation stattfinden soll oder nicht. Dadurch wird es ermöglicht, plattformübergreifende Systemzustände im gesamten System oder in Teilen des Systems zu definieren. Auf einer Plattform kann somit auf einen Systemzustand gewartet werden, der von einer anderen Plattform bereitgestellt wird. Anders ausgedrückt bedeutet dies, daß Abhängigkeiten zwischen den verschiedenen Teilen der Software auf den verschiedenen Rechnern des Realzeitsystems nunmehr auf einfache Weise bereits zur Designzeit berücksichtigt werden können.

Eine Ausführungsform der Erfindung ist durch Anspruch 5 angegeben. Durch diese Ausführungsform wird der Anlauf bezüglich der Anwender-SW wesentlich feiner und flexibler als bisher. Anwender-Software läuft nur dann, wenn sie etwas mit dem Anlauf zu tun hat. Der Anlauf wird damit schneller und stabiler.

Im folgenden wird ein Ausführungsbeispiel der Erfindung anhand der Zeichnung näher erläutert.

Zunächst erfolgt eine Erläuterung von im folgenden häufig verwendeten Ausdrücken.

### Anlauf (Recovery) :

Maßnahmen, um nach Auftreten eines Fehlers, nach Spannungsausfall, bei Inbetriebnahme etc., einen für den Ablauf des Anlagenprogrammsystems geeigneten Zustand von Hardware- und Software herzustellen.

Anlagenprogrammsystem (APS = Application Program System): Ein Anlagenprogrammsystem enthält alle Programme und Daten, die in einem Rechnersystem, z.B. einer Vermittlungsstelle, benötigt werden (ausgenommen sind Urladeprogramme des Realzeitsystems). Für jedes komplexe Rechnersystem, ist ein individuelles, d.h. auf die einsatzspezifischen Merkmale des betreffenden Rechnersystems zugeschnittenes Anlagenprogrammsystem (kundenspezifisches APS) erforderlich. Das Anlagenprogrammsystem stellt ein bereits gebundenes Programmsystem in Maschinensprache dar.

### Dienstleistungsmodul, Kapsel:

Die Software wird auf Programmiersprachenebene in Modulen strukturiert. In Chill werden Module, die in enger Beziehung zueinander stehen, in größeren SW-Komponenten, sog. Dienstleistungsmodulen (Service Provision Unit SPU), zusammengefaßt. Das SPU stellt diejenige Softwareeinheit dar, die jeweils vom Compiler übersetzt wird. Kapseln stellen diejenigen Softwareeinheiten dar, die in das Realzeitsystems geladen werden können und während der Produktionszeit des Anlagenprogrammsystems durch den Builder aus Dienstleistungsmodulen gebildet werden.

### Software-Komponenten-Pool:

Der Software-Komponenten-Pool umfaßt die Gesamtheit der (Source-Code-)SW-Komponenten, von denen jeweils ein Teil zu Erzeugung eines kundenspezifischen APS compiliert und zusammengebunden wird.

### Anlaufsteuerungsprogramme:

Die Anlaufsteuerungsprogramme steuern den Anlauf und werden im folgenden auch als Start-Up-Steuerungsprogramme, (kurz SUPO) bezeichnet. Die Anlaufsteuerungsprogramme umfassen einen Anlaufteil (SUPO_SYNC), der im Betriebssystem-Modus (Superviser-Mode) läuft und einen Anlaufteil (SUPO_PROCESS), der im Anwender-Modus (User-Mode) läuft und als Prozeß implementiert ist.

Zunächst folgt eine Kurzdarstellung der Erfindung.

Der Erfindung liegt die Aufgabe zugrunde, einerseits eine frühzeitige und enge Kontrolle über den Gesamtablauf des Anlaufs zu bekommen, andererseits den Gesamtanlauf flexibel, d.h. unabhängig von den Features des kundenspezifischen APS zu halten.

Um diese Aufgabe zu lösen, wird die ganze SW-Produktion in das neue Anlauf-Konzept integriert. Bereits zur Designzeit müssen die SW-Entwickler SPs in Form von Beziehungen (Bedingungen und Beiträgen) zu anderen Synchronisationspunkten und auszuführenden Aktionen deklarieren. Diese Deklarationen erfolgen in den von den Entwicklern jeweils entworfenen SW-Komponenten.

Durch die Kompilierung wird aus den SP-Deklarationen eine Teil-Tabelle erzeugt.

Durch das Binden der SW-Komponente während der Produktionszeit des kundenspezifischen Anlagenprogrammsystems werden diese Teil-Tabellen schließlich zu einer verteilten Tabelle (aus logischer Sicht einer einzigen Tabelle) verbunden. Diese Verbindung erfolgt mit Hilfe eines speziellen Tools gemäß den in den SW-Komponente (Dienstleistungsmodulen bzw. genauer gesagt den darin enthaltenen Modulen) deklarierten Beziehungen zu anderen SPs.

Die Anlaufsteuerungsprogramme greifen dann auf diese Offline erzeugten und verbundenen Tabellen zu, um den Anlauf gemäß den in den Tabellen enthaltenen Anlaufinformationen auszuführen.

Mit Hilfe der Offline erzeugten Anlauftabellen wird es ermöglicht, die Anlaufsteuerungsprogramme unabhängig von den Features des Anlagenprogrammsystems zu halten. Die Anlaufsteuerungsprogramme müssen somit nur mehr geändert werden, wenn der Anlauf selbst neue Features erhalten soll.

Bezüglich des Anlagenprogrammsystems sind die Anlaufsteuerungsprogramme jedoch völlig unabhängig. Diese Unabhängigkeit ergibt sich ganz einfach daraus, daß die Anlauf-Synchronisationsinformationen von den einzelnen Komponenten des Anlagenprogrammsystems selbst vorgegeben werden und Offline in die Anlaufsteuertabellen eingebracht werden.

Durch den Anlauf wird ein Realzeitsystem Schritt für Schritt gestartet, wobei jeder Schritt einen stabilen Zustand repräsentiert. Diese Zustände werden im folgenden auch als Synchronisationspunkte bezeichnet. Einige von ihnen haben nur lokale Bedeutung, während andere wiederum eine systemweite Bedeutung haben. Die Bedeutungsweite hängt ganz von der Beschreibungs-Ebene ab, in der sich die Synchronisationspunkte befinden.

Die Erfindung wird nachfolgend anhand der Zeichnungen näher erläutert. Dabei zeigen:
Fig. 1 die (Hierarchie-)Ebenen der Anlaufsegmente eines beispielhaften Vermittlungssystems,
Fig. 2 die Struktur der Anlauftabellen innerhalb eines Prozessors,
Fig. 3 die drei Zustände, die eine SP-Zelle annehmen kann und die Art und Weise, nach der das Überführen der SP-Zellen von einem Zustand in den nächsten erfolgt,
Fig. 4 einen bsph. Anlauf unter Einbeziehung der Prozeß-Ebene,
Fig. 5 einen externen Synchronisationspunkt bestehend aus zwei virtuellen Sychronisationspunkten.

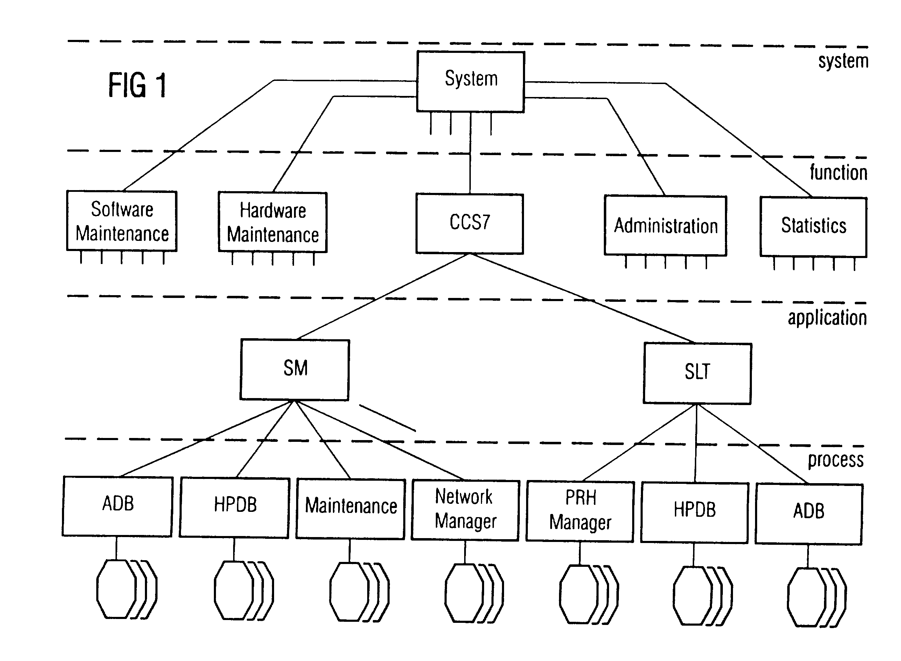

FIG 1 zeigt die (Hierarchie) Ebenen der Anlaufsegmente eines beispielhaften Vermittlungssystems, nämlich eine System-Ebene, eine Funktions-Ebene, eine Applikations- und eine User-Ebene.

Der Anlauf des Anlagenprogrammsystems erfolgt unter Benutzung der vollständigen Tabelle, d.h. aller Anlaufsegmente. In den verschiedenen Hierarchieebenen der Anlaufsegmente ist jeweils der Standpunkt der Beschreibung unterschiedlich, d.h. auf oberster Ebene beschreiben die Anlaufsegmente das ganze System aber nur sehr global und je weiter man sich in den Hierarchieebenen nach unten bewegt, um so detaillierter wird die Beschreibung, jedoch nimmt in jedem Anlaufsegment die Menge der beschriebenen Software ab. Auf der untersten Ebene wird nur noch das Zusammenspiel einzelner Prozesse einer SPU beschrieben, dieses aber vollständig, d.h. man kann hier die Beziehungen zwischen einzelnen Prozessen erkennen.

In der System-Ebene (Stufe 1) wird das Zusammenspiel der einzelnen SW-Funktionskomplexe während des Anlaufs beschrieben. Diese Ebene enthält Synchronisationspunkte, die den Anlauf des gesamten Anlagenprogrammsystems definieren. Diese SP stellen ein Ursprungsraster dar, in das sich die restliche Software einhängt.

Die Funktions-Ebene (Stufe 2) beschreibt den Anlauf für Komponenten, die wesentliche Funktions-Komplexe des Systems betreffen, wie beispielsweise Hardware-Maintenance, Software-Maintenance, CCS7, die ebenfalls eine systemweite Bedeutung haben.

Die Applikations-Ebene beschreibt den Anlauf für funktionale Komponenten (einige noch immer mit einer globalen Bedeutung); im Falle von CCS7 können als Beispiele für solche funktionale Komponenten ein Signalling-Manager SM und ein Signalling-Link-Terminal SLT genannt werden.

Die Process-Ebene (Hierarchie-Ebene 4) beschreibt den Anlauf für die Process-Software des Anlagenprogrammsystems, die im folgenden auch als User-SW bezeichnet wird. Als Beispiele für Komponenten der Process-Ebene können eine Application Data Base ADB, eine High Performance Database HPDB und ein Protocol Handler Manager (PRH Manager) genannt werden.

Jedes Anlauf-Segment einer SW-Komponente enthält eine Liste von Synchronisationspunkten, wobei jeder Synchronisationspunkt im wesentlichen zwei Klassen von Anlaufinformationen (Beziehungs-Informationen) enthält.

Bei der einen Klasse von Beziehungs-Informationen handelt es sich um sog. "Aktionen". Diese "Aktionen" stellen eine Beschreibung derjenigen Aktivitäten dar, die ausgeführt werden müssen, so bald der durch den Synchronisationspunkt dargestellte Systemzustand erreicht worden ist.

Bei der anderen Klasse von Beziehungs-Informationen handelt es sich um "Voraussetzungen", die erfüllt sein müssen.

Die Beziehungen zwischen SPs beinhalten jeweils zwei Anteile:
1) einen Teil, der in dem einen SP beschreibt, daß dieser SP (der eine SP) einen Beitrag zu einem anderen SP liefert, und
2) einen Teil, der in dem anderen SP beschreibt, daß dieser SP (der andere SP) auf die Voraussetzung des einen SPs warten muß.

Soll z.B. eine Beziehung zwischen zwei SPs definiert werden (SP_x und SP_y), wobei SP_x vor SP_y erreicht sein muß, dann gibt es für diese Beziehung zwei Anteile:
1) bei SP_x steht, daß SP_x einen Beitrag zu SP_y leisten soll (dies steht in den "Aktionen" von SP_x).
2) bei SP_y steht, daß SP_y auf einen Beitrag von SP_x warten muß (dies steht in den "Voraussetzungen" von SP_y).

Beide Klassen von Beziehungs-Informationen (Aktionen und Voraussetzungen) bestehen aus einer Mischung: sie enthalten prozessbezogene Teile und segmentbezogene Teile:
1) Aktionen:
   a) Segment-Anteil:
      - Kontributionen zu anderen SPs
   b) Prozeß-Anteil:
      - Start von Prozessen
      - Fortführen von vertagten (suspendierten) Prozessen
      - Informieren von Prozessen (per Nachricht)
2) Voraussetzungen:
   a) Segment-Anteil:
      - "Warten" auf Kontributionen von anderen SPs
   b) Prozess-Anteil:
      - "Warten" auf Kontributionen von Prozessen

Beziehungsinformationen zu anderen Synchronisationspunkten werden durch entsprechende Statements innerhalb der Definition eines Synchronisationspunktes definiert.

Um eine zu komplexe Beziehungsstruktur zwischen den AnlaufSegmenten zu vermeiden, dürfen die in einem Segment enthaltenen SPs sich nur auf Synchronisationspunkte anderer Segmente mit einem Stufenunterschied von höchstens einer Hierarchie> Ebene beziehen.

Um die vom Betriebssystem verwalteten Prozesse, die im folgenden auch als User-Prozesse bezeichnet werden, in den Anlauf einzubinden, definiert der User-SW-Programmierer zunächst ebenfalls ein oder mehrere Anlauf-Segmente in einem Dienstleistungsmodul, das den oder die einzubindenden Prozesse enthält und verknüpft die Anlaufsegmente durch entsprechende Verknüpfungs-Statements (Beziehungs-Statements) mit den Anlaufsegmenten der Applikations-Hierarchie-Ebene. Des; weiteren muß der User die Beziehung seiner Prozesse zu den User-Anlaufsegmenten angeben, in dem er seine Prozesse anmeldet, wobei die Anmeldeinformationen jeweils auf einen SP bezogen sind. Die Anmeldeinformationen umfassen die Angabe, welcher Synchronisationspunkt innerhalb eines der User-Anlaufsegmentes benutzt wird, um einen User-Prozeß zu starten und für welchen Synchronisationspunkt der Prozeß einen Beitrag liefert. Die genannten Anmeldeinformationen auf Prozess-Ebene werden später näher erläutert.

Im folgenden wird die Struktur der Anlauftabellen, sowie die darin enthaltenen Informationen näher erläutert, bevor daraufhin die Benutzung der Anlauftabellen durch die SUPO näher erläutert wird.

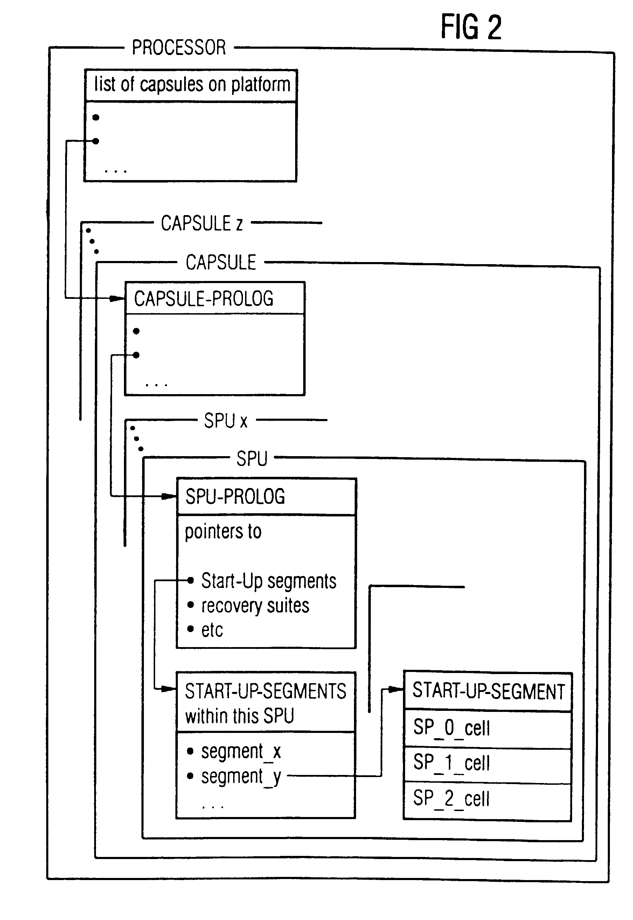

FIG 2 zeigt die Struktur der Anlauftabellen innerhalb eines Prozessors.

Die Anlauftabellen sind über die gesamte SW-Plattform eines Prozessors verteilt, wobei jedes Dienstleistungsmodul SPU denjenigen Teil an Anlaufinformationen enthält, der im Zusammenhang mit dem Anlauf für dieses Dienstleistungsmodul relevant ist.

Der Zugang zu den Anlauftabellen erfolgt über Adressinformationen im sog. "Kapsel-Prolog" und im "SPU-Prolog". Ein Segment der Anlauftabellen umfaßt eine Tabelle von sog. Sychronisationspunkt-Zellen (SP-Zellen), wobei jede SP-Zelle einen Synchronisationspunkt innerhalb des Segments repräsentiert. Eine SP-Zelle beinhaltet wiederum die Beschreibung der "Beziehungen", die mit diesem Synchronisationspunkt verknüpft sind. FIG 2 zeigt beispielhaft, wie ein Segment (Segment_y), das drei Synchronisationspunkte beinhaltet, in den Anlauftabellen repräsentiert wird.

Im folgenden wird die in den Anlauftabellen enthaltene Anlaufinformation näher erläutert.

Wie bereits vorher erläutert ist das Anlaufsegment diejenige Einheit in den Anlauftabellen, in der die eigentlichen Anlaufinformationen, nämlich die Synchronisationspunkt-Informationen in sog. SP-Zellen enthalten sind.

Zur Deklaration (Definition) von Anlaufsegmenten können folgende Programmiersprachmittel, genauer gesagt Datenstrukturen, benutzt werden:

Eine Datenstruktur "Segmentname", um die Identität des Segments zu definieren. Sie besteht aus der Kapsel-Kennung (Kapsel-ID), der Dienstleistungsmodul-Kennung (SPU-ID) und der Segment-Kennung (Segment-ID), wobei die Segmentkennung ein SET-Wert eines SET-Datentyps ist.

Eine Datenstruktur "Segment-Stufe", durch die die Hierarchie-Ebene innerhalb der Anlauf-Hierarchie definiert werden kann, zu der das Anlaufsegment gehört. Der Typ dieser Datenstruktur ist ebenfalls ein SET-Datentyp. Der Wert dieser Datenstruktur, nämlich die Hierarchie-Ebene, wird benutzt, um zu überprüfen, daß innerhalb der Synchronisationspunkt-Informationen keine Versuche gemacht wurden, Anlaufinformationen über mehr als eine Hierarchiestufe zu übergeben.

Eine Datenstruktur "Synchronisationspunkt", durch die ein Anlauf zustand und damit ein Systemzustand definiert wird. Diese Datenstruktur ist untergliedert in die Datenstrukturen "SP-Name", "Condition", "Contributions", "Timing of SP", "External SP" und "Actions".

Die Datenstruktur "SP-Name" dient der Kennung des SPes und ist vom Typ "SET".

Durch die Datenstruktur "Conditions" können Voraussetzungen (Bedingungen) definiert werden, die erfüllt sein müssen, bevor ein Synchronisationspunkt erreicht ist. Die genannnten Bedingungen werden dadurch ausgedrückt, daß auf Prozesse oder andere Synchronisationspunkte Bezug genommen wird.

Die genannten Bedingungen sind nur erlaubt, um Beziehungen in Aufwärtsrichtung der Hierarchie-Ebenen herzustellen (z.B. ein SP in Hierarchie-Ebene 4 kann sich auf einen Synchronisationspunkt in Hierarchie-Ebene 3 beziehen).

Über die Datenstruktur "Contributions" können Kontributionen (Beiträge) definiert werden, die nach dem Erreichen des SPs für wenigstens einen anderen SP geleistet werden. Kontributionen sind Bestandteil von "Aktionen".

Anders ausgedrückt stellen diese "Beiträge" für einen "höherstufigen" SP Bedingungen dar, die durch den niedererstufigen Synchronisationspunkt hergestellt bzw. erfüllt werden müssen, bevor der höherstufige SP erreicht werden kann.

Kontributionen sind nur in aufwertiger Richtung erlaubt (d.h. ein Synchronisationspunkt in Hierarchie-Ebene 3 darf sich auf einen Synchronisationspunkt in Hierarchie-Ebene 2 beziehen).

Eine Beziehung zwischen SPs besteht immer aus den beiden bereits genannten Anteilen, nämlich den Vorraussetzungen und den Aktionen. Die Definition einer Beziehung erfolgt immer von einem der Synchronisationspartner aus, d.h. in dem vorher genannten Beispiel ist entweder bei SP_x beschrieben, daß SP_x einen Beitrag zu SP_y leisten will oder bei SP_y beschrieben, daß SP_y auf einen Beitrag von SP_x wartet. D.h. bei der Definition einer Synchronisationsbeziehung ist diese noch nicht vollständig, es fehlt immer eine Hälfte der Beziehung. Diese Hälfte wird während der APS-Produktion durch Linker/Offline Builder ergänzt.

Die Reihenfolge der SPs während des Anlaufs wird definiert durch die Beziehungen zwischen den SPs. Dabei ist die Ebene der Segment-Hierarchie, in der sich ein SP befindet, völlig unwichtig. Die Hierarchieebene wird nur benötigt, um die SPs (und die Anlaufsegmente) zu strukturieren, d.h. damit man den Überblick über SPs und deren Beziehungen nicht verliert.

Durch die Kontributionen eines SPs zu einem anderen SP wird also genau das gleiche erreicht, wie durch eine "Condition" des anderen SPs. Man hat also bei der Definition der Synchronisationsbeziehungen einen Freiheitsgrad. Diesen Freiheitsgrad nützt man aus, um "feature independance" zu erreichen: die Synchronisationsbeziehungen werden immer von demjenigen SP definiert, der in der Segment-Hierarchie weiter unten liegt. In dem vorher genannten Beispiel würde (vorausgesetzt, daß SP_x in der höheren Hierarchie-Ebene liegt) die Definition folgendermaßen aussehen:

SP_y definiert eine "Condition" (wait_for), d.h. SP_y definiert, daß SP_x vor ihm erreicht sein muß.

Erst durch die beiden, von ihrer Wirkung her identischen Sprachmittel "Kontribution" und "Condition" und die Ausnutzung des Freiheitsgrades kann Start-Up "feature independant" werden.

Die Datenstruktur "Timing_of_SP" enthält Informationen, die die maximale Zeitdauer anzeigen, die einem Segment erlaubt ist, um von einem Synchronisationspunkt zu nächsten Synchronisationspunkt voranzuschreiten. Wenn der Synchronisationspunkt nicht erreicht ist, bevor der durch diese maximale Zeitdauer festgelegte Timer abläuft, wird eine entsprechende Fehlerbedingungen durch ein entsprechendes Flag signalisiert.

Die Datenstruktur "External Synchronisation Point" zeigt an, ob eine Nachricht, die anzeigt, daß die lokalen Vorbedingungen dieses Synchronisationspunktes erfüllt sind, zu der sogenannten Parent Plattform (parent platform) gesandt werden soll. Die Parent Plattform ist diejenige Plattform, die die Kontrolle über die Maintenance-Aktivitäten der zugehörigen Dependant Plattformen übernimmt. Die Datenstruktur dient somit zur plattformübergreifenden Synchronisation und stellt somit ebenfalls eine im Zusammenhang mit dem Synchronisationspunkt auszuführende Aktion dar.

Die Synchronisations-Nachricht soll nur zu der Parent Plattform geschickt werden, nicht zu allen benachbarten Plattformen (diese sind der einzelnen Dependant-Plattform gar nicht bekannt, können nur aus der DB ausgelesen werden, die erst während des Hochlaufs geladen wird).

Nachdem bisher die in den Anlaufsegmenten deklarierbaren Anlaufinformationen dargestellt worden sind, werden nun diejenigen Anlaufinformationen erläutert, die für einen Anwender-Prozeß, der an dem synchronisierten Anlauf beteiligt ist, relevant sind.

Die Deklarationen der Anlaufinformationen für einen Prozeß können sich dabei nur auf solche Synchronisationspunkte beziehen, die innerhalb derjenigen SPU definiert sind, zu der der Prozeß gehört, d.h. innerhalb deren der Prozeß deklariert worden ist.

Die genannten Delarationen für einen Prozeß werden Offline, d.h. vom Compiler und/oder Binder, verarbeitet, um daraus die in den Anlauftabellen enthaltenen Informationen zu produzieren.

Folgende Deklarationen bzw. daraus erzeugte Anlaufinformationen sind möglich:

Für einen Prozeß kann durch die Deklaration "Start_at_SP" festgelegt werden, wann, d.h. bei Erreichen welches SPs, ein Prozeß gestartet werden soll. Diese Deklaration bewirkt einen Eintrag in einer sog. Starttabelle, die pro Synchronisationspunkt vorhanden ist, und die die an diesem SP zu startende Prozesse auflistet. Die Deklaration erfolgt innerhalb desjenigen Moduls, das den zu startenden Prozeß enthält.

Ein Prozeß hat des weiteren die Möglichkeit, anzuzeigen, daß er wünscht suspendiert zu werden, bis ein bestimmter Synchronisationspunkt erreicht ist. Diese Möglichkeit wird durch die Deklaration des Betriebssystemaufrufs "Wait_for_SP" realisiert, wobei der Betriebssystemaufruf (Supervisory Call, abgekürzt SVC) als Übergabe-Parameter die Angabe des bestimmtem SPs enthalten muß.

Ein Prozeß kann darüber hinaus anfordern, informiert zu werden, wenn ein bestimmter Synchronisationspunkt (innerhalb seiner SPU) erreicht worden ist. Dies wird in zwei Teilen realisiert.

Der erste Teil (statischer Teil) wird durch eine Deklaration bewirkt, aufgrund deren Offline ein Eintrag in eine pro SP vorhandene "Watch-Tabelle" erfolgt, die die Watch-Anforderungen der Prozesse aufnimmt. Die Deklaration erfolgt innerhalb desjenigen Moduls, das den zu startenden Prozeß enthält.

Der zweite Teil (dynamischer Teil) wird durch die Deklaration des Betriebssystemaufrufs "Watch_for_SP" im anfordernden Prozeß selbst bewirkt.

Schließlich kann ein Prozeß -nach seinem Start- einen Beitrag zu einem Synchronisationspunkt liefern und und durch die Deklaration des BS-Aufrufs "Contribute_to_SP" nach seinem erfolgtem Beitrag einem SP anzeigen, daß der Beitrag erfüllt worden ist. Dies wird wiederum in zwei Teilen realisiert.

Der erste Teil (statischer Teil) wird durch eine Deklaration bewirkt, aufgrund deren Offline ein Eintrag in eine pro SP vorhandene "Kontributions-Tabelle" erfolgt, die die Kontributions-Anzeigen der Prozesse aufnimmt. Die Deklaration erfolgt innerhalb desjenigen Moduls, das den zu startenden Prozeß enthält.

Der zweite Teil (dynamischer Teil) wird durch den Betriebssystemaufruf "Contribute_to_SP" im anzeigenden Prozeß selbst bewirkt.

Bei "Contrib To" sind diese beiden Teile logisch nötig:
- mit dem Table Announcement (statischer Teil, Deklaration) wird bewirkt, daß der zugehörige SP auf die Kontribution des Prozesses wartet.
- mit dem BS-Aufruf "Contribute_to_SP" macht der Prozeß (nachdem er die notwendigen Aktionen durchgeführt hat) seinen Beitrag zu dem SP, d.h. mit dem BS-Aufruf sagt der Prozeß dem Start-Up, daß seine Voraussetzungen für den SP erfüllt sind.
- Demgegenüber sind die beiden Teile des "Watch For" logisch nicht notwendig; sie sind nur dann notwendig, wenn die Buffer-IDs, mit denen man Nachrichten verschicken kann, Offline nicht bekannt sind. In diesem hier angenommenen Fall müssen sie Start-Up Online mitgeteilt werden; der statische Anteil hierfür reserviert nur den von Start-Up benötigten Platz, damit die (Offline nicht bekannte) Buffer-ID eingetragen werden kann.

Im folgenden wird die Funktion der Anlaufsteuerungsprogramme SUPO_SYNC und SUPO_PROCESS näher erläutert.

Die Anlaufsteuerungsprogramme benützen die Anlauftabellen, (wie bereits erwähnt), um den Anlauf zu steuern. Genauer gesagt steuern sie den synchronisierten Anlauf, indem sie SP-Zellen von einem Zustand in den anderen überführen.

Die Behandlung der SPs ist unabhängig von der Hierarchie-Ebene und der Schale, in der sie sich befinden.

Die Unterscheidung zwischen SUPO_SYNC und SUPO_PROCESS ist notwendig aufgrund der Aufgaben, die mit den SPs verbunden sind; dabei wird die gleiche Aufgabe für alle SPs immer vom gleichen SUPO-Anteil ausgeführt.

Die Behandlung der SPs erfolgt fast vollständig durch SUPO_SYNC. SUPO_SYNC überprüft, ob die Voraussetzungen erfüllt sind und führt ggfs. die Aktionen durch (einschließlich dem Einhängen neuer "fertiger" SP-Cells in den "ready-pool").

SUPO_PROCESS übernimmt nur die Aufgaben, die in Schale 3 des APS nicht durchführbar sind:
- Zeitüberwachung der SPs
- Nachrichtenverkehr zur Parent Plattform im Fall von externen SPs
- Anstoß der Initialisierung der Start-Up-Tabelle und Starten des Synchronisationsmechanismus.

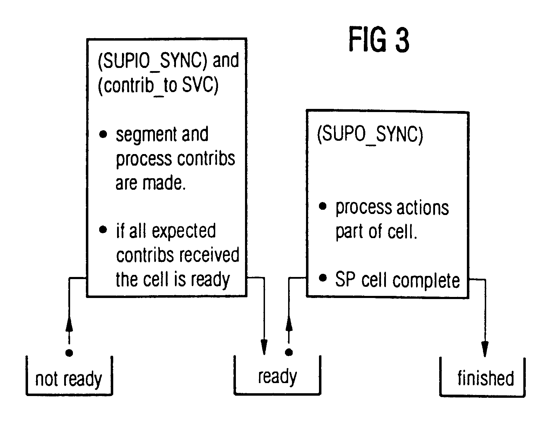

FIG 3 beschreibt die drei Zustände, die eine SP-Zelle annehmen kann und die Art und Weise, nach der das Überführen der SP-Zellen von einem Zustand in den nächsten erfolgt.

Das gesamte Anlaufverfahren wird initialisiert, indem die erste SP-Zelle zur Ausführung fertig gemacht wird, d.h. in den Zustand "bereit" ("ready") überführt wird. Dies kann beispielsweise über eine Spezialschnittstelle geschehen.

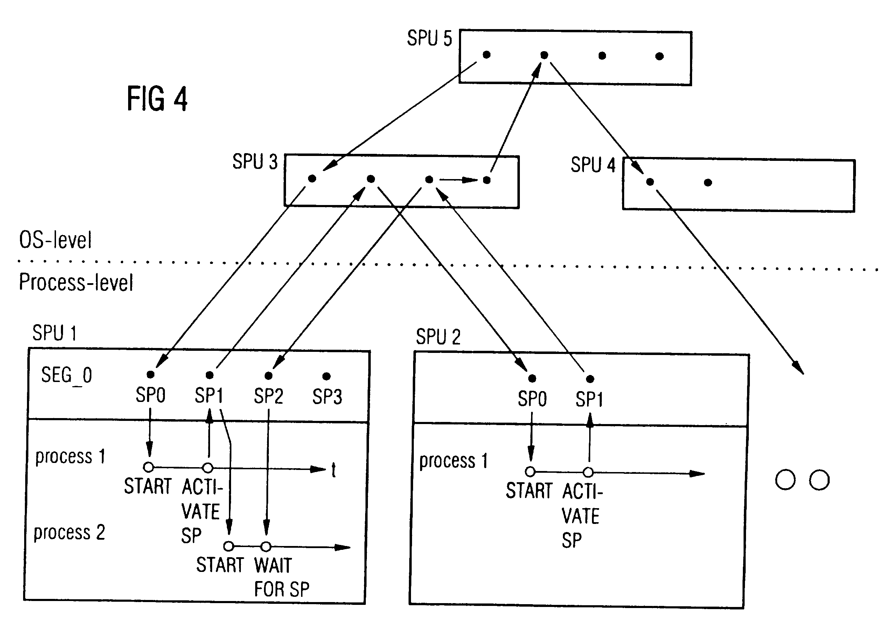

Aufgrund der Beziehungen zwischen den SPs muß nur einmal "der erste" SP "ready" gemacht werden, d.h. es muß nicht (und darf auch nicht) in jeder SPU der erste SP "ready" gemacht werden. Vielmehr werden aufgrund der Beziehungen vom "ersten SP" zu anderen SPs diese automatisch "ready", da die Aktionen des "ersten SPs" Kontributionen zu anderen SPs beinhalten und die anderen SPs aufgrund der Kontributionen "ready" werden können. In dem beiliegenden Bild (FIG 4) ist der "erste SP" der erste SP in "SPU5".

FIG 4 stellt einen bsph. Anlauf unter Einbeziehung der Prozeß-Ebene dar.

Immer, wenn ein Prozeß eine Kontribution macht, überprüft SUPO_SYNC, ob alle Voraussetzungen des zugehörigen SPs (zu dem der Prozeß seine Kontribution macht) erfüllt sind (d.h. der Mechanismus ist ereignisgesteuert).

Sind alle Voraussetzungen eines SPs erfüllt, so werden (von SUPO_SYNC, noch innerhalb des Contribute-To-SVCs) die Aktionen des SP ausgeführt:
- es werden u.U. Prozesse gestartet,
- Nachrichten an Prozesse geschickt,
- vertagte Prozesse wieder aufgeweckt und
- Kontributionen zu anderen SPs gemacht.

Aufgrund dieser Aktionen können noch innerhalb des Contribute-To-SVCs weitere SPs "ready" werden (wenn für die SPs, zu denen Kontributionen gemacht werden, nach der Kontribution alle Voraussetzungen erfüllt sind). Die Aktionen dieser SPs werden ebenfalls noch innerhalb des Contribute-To-SVC-s ausgeführt (usw.).

Nachdem die Aktionen aller SPs, die "ready" sind, ausgeführt wurden, wird dieser Contribute-To-SVC beendet; es wird ein Prozess ausgewählt, der zum Ablauf kommt (vom Betriebssystem).

Wie bereits beschrieben, enthält jeder SP die Information, welche Voraussetzungen erfüllt sein müssen, bevor der SP "ready" ist. Die Voraussetzungen können aus zwei Anteilen bestehen:
- SPs, die vorher erreicht sein müssen:
   Diese Information ist entweder direkt bei dem SP definiert (falls er auf einen SP in einer höheren Hierarchie-Ebene wartet) oder vom Linker/Offline Builder erzeugt (falls ein SP einer niedrigeren Hierarchie-Ebene meint, vorher erreicht sein zu müssen).
- Beiträge von Prozessen:
   Die eigentliche Arbeit während des Hochlaufs machen Prozesse. Daher sind die Beiträge von diesen besonders wichtig.
   Wie bereits in 16) beschrieben, besteht eine Kontribution eines Prozesses aus zwei Anteilen: Einem statischen und einem dynamischen. Der statische Anteil ist dabei ausschließlich dafür da, daß der zugehörige SP "weiß", daß er auf einen Beitrag eines bestimmten Prozesses warten muß.

SP-Zellen werden von dem "nicht_bereit-Pool" in den "bereit-Pool" überführt und zwar als Folge eines der folgenden Ereignisse a) und b) :
a) SUPO_SYNC macht einen Beitrag zu einem SP, der sich im "nicht_bereit-Pool" befindet, auf Segment-Ebene. Nach Erledigung dieses Beitrags überprüft SUPO_SYNC, ob alle Vorbedingungen des Synchronisationspunkts erfüllt sind. Wenn ja, dann überführt SUPO_SYNC die SP-Zelle in den "bereit-Pool".
b) Ein Prozeß erledigt eine Aufgabe, die für den Anlauf relevant ist und daher auch über die beschriebene Deklaration (bzw. table announcement bzw. statischer Anteil der Prozeß-Kontribution) in der Start-Up-Tabelle als Voraussetzung für einen bestimmten SP steht.
   Nach Erledigen dieser Aufgabe ruft der Prozeß den Contribute-To-SVC, innerhalb dessen die vorher beschriebenen Aktionen ablaufen.

Die Überführung einer SP-Zelle vom Zustand "bereit" in den Zustand "beendet" wird durch Aktionen erreicht, die von SUPO_SYNC gesteuert werden.

Im Zusammenhang mit einem Synchronisationspunkt können folgende Aktionen ausgeführt werden:
- eine Liste von Prozessen, die im Zusammenhang mit dem Synchronisationspunkt vom Betriebssystem gestartet werden müssen,
- Kontributionen, die zu anderen SP-Zellen gemacht werden müssen,
- eine Liste von Prozessen, die in einer Warteschlange darauf warten, daß dieser Synchronisationspunkt erreicht wird, werden wieder in die "ready to run"-Warteschlange eingereiht,
- eine Standardnachricht wird zu den Buffern aller derjenigen Prozesse gesandt, die informiert werden wollen, wenn dieser Synchronisationspunkt erreicht worden ist.
- SP-Zellen eines Segments werden von SUPO in den "bereit-Pool" (ready-pool) bewegt. (Wenn alle Vorbedingungen des nächsten Synchronisationspunkts innerhalb desselben Segments erfüllt sind, ist der nächste Synchronisationspunkt dieses Segments bereit, um ausgeführt zu werden und er wird deshalb in den "ready-pool" bewegt.

Wenn alle die genannten Aktionen eines Synchronisationspunktes ausgeführt sind, wird innerhalb der SP-Zelle ein entsprechendes Flag gesetzt.

Zusammenfassend kann gesagt werden, daß SUPO_SYNC die Überführung einer SP-Zelle vom Zustand "bereit" in den Zustand "beendet" bewirkt, indem es die SP-Zelle aus dem Bereit-Pool nimmt. Die Reihenfolge, in der SUPO_SYNC die SPs aus dem Pool nimmt ist egal. Alle SPs im "ready pool" sind erreicht und die Aktionen all dieser SPs müssen ausgeführt werden.

In Realität sind die Pools als Ketten von SP-Cells realisiert. Bei der Bearbeitung wird in der Kette vorne angefangen und immer der nächste in der Kette bearbeitet; neue SPs werden hinten in die Kette eingehängt. Somit wird sichergestellt, daß alle SPs bearbeitet werden.

Außerdem gibt es in Realität keinen "not ready pool" und keinen "beendet-Pool" ("finished pool"). Diese Pools werden durch Flags in den SP-Cells ersetzt, die anzeigen, wie viele Voraussetzungen für einen SP noch fehlen bzw. ob die Aktionen eines SPs bereits abgearbeitet sind.

Wenn es in dem bereit-Pool keine SP-Zellen mehr gibt, hat SUPO_SYNC keine Arbeit mehr und muß darauf warten, daß ein User-Prozeß mit Hilfe des Betriebssystemsaufruf "Contribute to SP" eine SP-Zelle in den bereit-Pool überführt.

Wenn ein Synchronisationspunkt mit externer Bedeutung erreicht wird, führt SUPO_SYNC die mit diesem Synchronisationspunkt verknüpften Aktionen nicht sofort aus, sondern veranlaßt SUPO_PROCESS dazu, eine Nachricht zu der Parent Plattform zu senden, durch die dieser angezeigt wird, daß der genannte SP auf der die Nachricht sendenden Plattform, d.h. in lokaler Hinsicht, erreicht ist. Gleichzeitig verzögert SUPO_SYNC die Ausführung der mit diesem Synchronisationspunkt verknüpften Aktionen bis von der Parent Plattform über SUPO_PROCESS die Nachricht "SP global erreicht" empfangen worden ist.

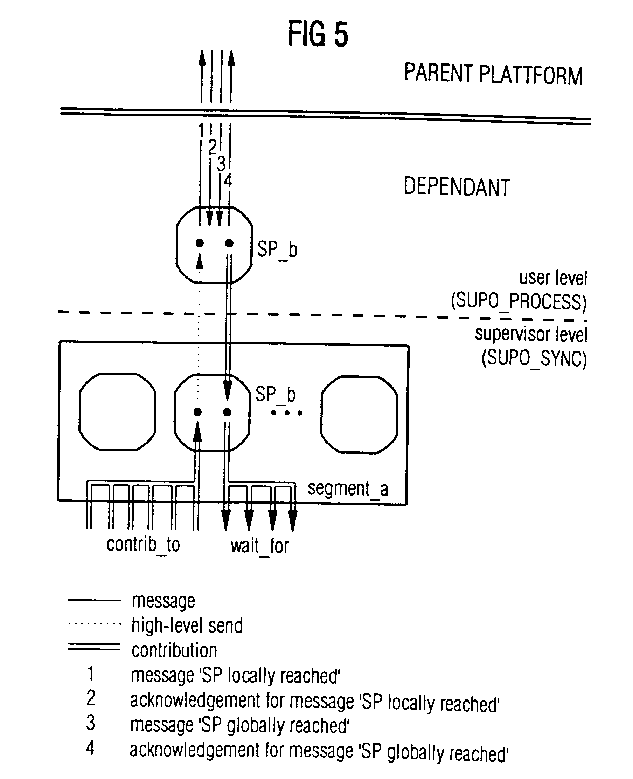

Ein externer Synchronisationspunkt kann aus zwei virtuellen Synchronisationspunkten bestehend betrachtet werden, was durch FIG 5 verdeutlicht wird.

Der erste virtuelle Synchronisationspunkt innerhalb des Segment_a umfaßt im Zusammenhang mit dem betrachteten Synchronisationspunkt alle (lokalen) Vorbedingungen des Synchronisationspunktes und eine einzige Aktion, nämlich das Senden einer Nachricht ("SP Lokal erreicht") zur Parent Plattform.

Der zweite virtuelle Synchronisationspunkt umfaßt die einzige Vorbedingung, daß die Nachricht "SP global erreicht" von der Parent Plattform empfangen worden ist und umfaßt darüber hinaus alle übrigen (lokalen) Aktionen des betrachteten Synchronisationspunktes.

Im folgenden werden die anlaufbezogenen Betriebssystemaufrufe (supervisory calls, kurz SVC) der User-Prozesse näher erläutert:

Alle durch das Betriebssystem gestarteten Prozesse müssen erklären, wann, d.h. an welchen Synchronisationspunkt, sie gestartet werden sollen. Sobald dieser Synchronisationspunkt erreicht worden ist, werden die an diesem Synchronisationspunkt zu startenden Prozesse durch SUPO_SYNC gestartet. SUPO_SYNC startet alle Inkarnationen eines Prozeßtyps.

Der Betriebssystemaufruf "Contribute_to_SP", der durch die User-Prozesse erfolgt, hat Parameter, die zum einen das Segment und den Synchronisationspunkt (innerhalb derjenigen SPU, die auch den Prozeß enthält), für den ein Beitrag geleistet werden soll, anzeigen und zum anderen ob der Beitrag positiv oder negativ ist, d.h. ob der Beitrag ausgeführt werden konnte oder ob ein Fehler auftrat.

SUPO_SYNC benutzt nach seinem Aufruf den Segmentnamen und den angegebenen Synchronisationspunkt, um auf die entsprechende SP-Zelle, für die ein Beitrag geleistet werden soll, zuzugreifen. Die SP-Zelle erhält danach einen Zeitstempel, um anzuzeigen, daß der Beitrag gemacht worden ist und wann er gemacht wurde. Wenn alle von einer SP-Zelle erwarteten Beiträge gemacht worden sind, ist die SP-Zelle bereit, um ausgeführt zu werden, d.h. bereit, daß die mit dem Synchronisationspunkt verknüpften Aktionen ausgeführt werden. Dies manifestiert sich darin, daß die SP-Zelle von SUPO_SYNC in den Bereit-Pool überführt wird. Unmittelbar darauf, d.h. im Rahmen desselben Aufrufs, werden alle mit dem Synchronisationspunkt verknüpften Aktionen unter der Kontrolle von SUPO_SYNC ausgeführt.

Der Betriebssystemaufruf "Wait_for_SP" wird von den User Prozessen durchgeführt, um sich selbst zu suspendieren, bis ein bestimmter Synchronisationspunkt erreicht worden ist. Der Betriebssystemaufruf hat Parameter, die das Segment und den Synchronisationspunkt (innerhalb der eigenen SPU) angeben.

Die Ausführung des Betriebssystemaufrufs erfolgt wiederum durch SUPO, wobei SUPO vom Betriebssystem gegrantete Routinen benutzt, um den suspendierten Prozeß (genauer gesagt den Prozeß-Kontroll-Block, kurz PCB) mit einer entsprechenden Liste innerhalb der Betriebssystem-Kapsel zu verknüpfen. Der Listenplatz wird wiederum mit dem im Betriebssystsemaufruf angegebenen Synchronisationspunkt verknüpft. Wenn der Synchronisationspunkt erreicht worden ist, wird der Prozeß aus der Liste herausgenommen und in den Zustand "Ready to run" überführt. Falls der Synchronisationspunkt bereits erreicht worden ist, wenn der Betriebssystemaufruf ausgeführt wird, wird der den Betriebssystemaufruf auslösende Prozeß selbstverständlich nicht suspendiert.

Der Betriebssystemaufruf "Watch_for_SP" wird von einem User-Prozeß durchgeführt, wenn er über einen erreichten Synchronisationspunkt informiert werden will. Der Betriebssystemaufruf ist notwendig, um SUPO über die Buffer-Kennung des User-Prozesses zu informieren, da diese zur Produktionszeit des APS noch nicht bekannt ist (der Buffer und damit die Buffer-Kennung eines Prozesses wird erst zur Laufzeit generiert).

Der Betriebssystemaufruf hat folgende Parameter:
- Das Segment und den Synchronisationspunkt (innerhalb der eigenen SPU), über den der User-Prozeß informiert werden will,
- Die Buffer-Kennung des User-Prozesses,
- Einen Antwortparameter, der dem User-Prozeß anzeigt, ob der Synchronisationspunkt gefunden wurde und ob die Buffer-Kennung der Liste von Buffer-Kennungen, die Meldungen empfangen, wenn der Synchronisationspunkt erreicht worden ist, angefügt werden konnte. Falls die Antwort negativ ist, wird die Nachricht, die anzeigt, daß der Synchronisationspunkt erreicht worden ist, nicht zum User-Prozeß gesendet.

Im folgenden werden die Werkzeuge zur Offline-Unterstützung des Anlaufs näher erläutert.

Die Erzeugung der Anlauftabellen erfordert folgende Mittel:
- Deklarationsmittel (Definitionsmittel), durch die die Anlaufsegmente und die darin aufzunehmenden Anlaufinformationen in geeigneter Weise deklariert werden können und
- Tabellengenerierungsmittel, die anhand der durch die Definitionsmittel beschriebenen Anlauf informationen für das SUPO geeignete Anlauftabellen erzeugen.

Während die genannten Definitionsmittel bereits ausführlich erläutert worden sind, wird nunmehr näher auf die Tabellengenerierungsmittel eingegangen.

Um die Anlauftabellen aus den für einen Prozessor bestimmten Dienstleistungsmodulen zu erzeugen, erzeugt der Compiler zunächst aus den in den Dienstleistungsmodulen enthaltenen Segmenten Teil-Anlauftabellen (Segmenttabellen). Zu diesem Zweck ist eine spezielle Compilierungsfolge der SPU-Module und der User-Module notwendig. Außerdem verbindet der Compiler die Segmenttabellen eines Dienstleistungsmoduls mit dem SPU-Prolog.

Beziehungen zwischen verschiedenen Segmenten werden durch den Linker und Offline-Builder aufgebaut. Dabei wird den Segmenttabellen die diesbezüglich nötige Information hinzugefügt.

Aufgrund der genannten Tabellengenerierungsmittel sind die Anlauftabellen bereits vor der letzten APS-Ladegeneration verfügbar. Der Gesamtablauf des Anlaufs kann daher bereits zu diesem Zeitpunkt durch entsprechende Überprüfungstools überprüft werden. Diese Überprüfungsmittel können beispielsweise die Anlauftabellen auf Konstistenz (Deadlocks etc.) überprüfen, eine Analyse bezüglich kritischer Pfade innerhalb des Gesamtablaufs durchführen, Bottlenecks und kritische Zeitpfade identifizieren. Dadurch kann die (Gesamt-) Anlauftabelle frühzeitig optimiert werden.

Schließlich kann mit Hilfe eines Anzeigemittels die (Gesamt-) Anlauftabelle in Form eines entsprechenden Anlaufplans für den Entwickler sichtbar gemacht werden. Der Entwickler kann Fehler dadurch leichter entdecken.

## Patentansprüche

1. Anlaufsystem eines Rechnersystems mit
mindestens einer Anlauftabelle, die den Anlauf des Programmsystems (APS) festlegt, und
Anlaufsteuerungsprogrammen (SUPO_SYNC, SUPO_PROCESS), die den Anlauf anhand der in den Anlauftabellen enthaltenen Anlaufinformationen steuern,
**dadurch gekennzeichnet,**
daß die Anlauftabelle Offline aus Anlaufinformationen erzeugt worden ist, die in den SW-Komponenten (SPU) des Programmsystems zu deren Designzeit deklariert worden sind.

2. Anlauf system nach Anspruch 1
**dadurch gekennzeichnet,**
daß die Anlauftabelle eine aus mehreren Teilanlauftabellen zusammengesetzte Tabelle darstellt, wobei eine Teiltabelle jeweils durch Compilierung der anlaufbezogenen Deklarationen einer SW-Komponente (SPU) entsteht.

3. Anlaufsystem nach einem der Ansprüche 1 bis 2,
**dadurch gekennzeichnet,**
die verschiedenen Teil-Tabellen von den Produktions-Tools, die zur Produktion des Programmsystem dienen, zu einer vollständigen Tabelle zusammengefügt werden.

4. Anlaufsystem nach einem der Ansprüche 1 bis 3,
**dadurch gekennzeichnet,**
daß innerhalb einer Tabelle festgelegt ist, ob zur Erfüllung einer Bedingung eine Synchronisation über Prozessorgrenzen hinweg durchgeführt werden soll.

5. Anlaufsystem nach einem der Ansprüche 1 bis 4,
**dadurch gekennzeichnet,**
daß auch die Anwender-SW mit Hilfe der Tabellen ihren Anlauf selbst definieren kann.

6. Anlauf system eines Realzeitsystems nach einem der Ansprüche 1 bis 5,
**dadurch gekennzeichnet,**
daß die Tabellen den Anlauf festlegen, indem sie zum einen Systemzustände (SP) mit vorgegebener Reihenfolge festlegen und zum anderen Aktionen, die nach dem Erreichen eines jeweiligen Systemzustandes ausgeführt werden sollen.

7. Anlauf system eines Realzeitsystems nach einem der Ansprüche 1 bis 6,
**dadurch gekennzeichnet,**
daß die Tabellen Systemzustände festlegen, indem sie Bedingungen (Condition, Contribution) festlegen, bei deren Erfüllen ein Systemzustand als erreicht gilt.

8. Verfahren zur Festlegung des Anlaufs eines Rechnersystems, demgemäß
- in einer SW-Komponente des Komponenten-Pools des Rechnersystems zu deren Designzeit Anlaufbeziehungen zur Einbindung der SW-Komponente in den Gesamtanlauf des Rechnersystems deklariert werden,
- aus denjenigen Software-Komponenten, die aus dem Komponenten-Pool für ein kundenspezifisches Programmsystem des Realzeitsystems ausgewählt werden, Offline eine Anlauftabelle erzeugt wird, die den Gesamtanlauf des Realzeitsystems festlegt und von Anlaufsteuerungsprogrammen Online dazu benutzt wird den Anlauf zu steuern.

## Claims

1. Start-up system of a computer system, having
at least one start-up table, which defines the start-up of the program system (APS), and
start-up control programs (SUPO_SYNC, SUPO_PROCESS), which control the start-up using the start-up information contained in the start-up tables,
characterized in that the start-up table has been generated off-line from start-up information that has been declared in the software components (SPU) of the program system at their design time.

2. Start-up system according to Claim 1, characterized in that the start-up table constitutes a table composed of a plurality of partial start-up tables, a partial table in each case being produced as a result of compiling the start-up related declarations of a software component (SPU).

3. Start-up system according to either of Claims 1 and 2, characterized in that the different partial tables are joined together by the production tools, which are used for the production of the program system, to form a complete table.

4. Start-up system according to one of Claims 1 to 3, characterized in that within a table it is defined whether, in order to satisfy a condition, a synchronization over process boundaries is intended to be carried out.

5. Start-up system according to one of Claims 1 to 4, characterized in that the user software can also define its start-up itself, with the aid of the tables.

6. Start-up system of a real-time system according to one of Claims 1 to 5, characterized in that the tables define the start-up in that, on the one hand, they define system states (SP) with a prescribed sequence and, on the other hand, actions which are intended to be carried out after a respective system state has been reached.

7. Start-up system of a real-time system according to one of Claims 1 to 6, characterized in that the tables define system states in that they define conditions (condition, contribution) such that when they are satisfied a system state counts as being reached.

8. Method of defining the start-up of a computer system, according to which
- in a software component of the component pool of the computer system, at its design time, start-up relationships for integrating the software component into the overall start-up of the computer system are declared,
- from those software components which are selected from the component pool for a customer-specific program system of the real-time system, a start-up table is generated off-line which defines the overall start-up of the real-time system and is used by start-up control programs on-line for the purpose of controlling the start-up.

## Revendications

1. Système de mise en marche d'un système informatique, comprenant au moins une table de mise en marche qui définit la mise en marche du système de programmes d'application (APS), et des programmes de commande de mise en marche (SUPO_SYNC, SUPO_PROCESS) qui commandent la mise en marche à l'aide des informations de mise en marche contenues dans les tables de mise en marche, caractérisé en ce que la table de mise en marche a été générée hors ligne à partir d'informations de mise en marche qui ont été déclarées dans les composants logiciels (SPU) du système de programmes d'application au moment de leur conception.

2. Système de mise en marche selon la revendication 1, caractérisé en ce que la table de mise en marche représente une table composée de plusieurs tables partielles de mise en marche, chaque table partielle étant obtenue par compilation des déclarations relatives à la mise en marche d'un composant logiciel (SPU).

3. Système de mise en marche selon l'une des revendications 1 à 2, caractérisé en ce que les différentes tables partielles sont assemblées par les outils de production servant à la production du système de programmes d'application, pour former une table complète.

4. Système de mise en marche selon l'une des revendications 1 à 3, caractérisé en ce qu'il est défini à l'intérieur d'une table si une synchronisation au-delà des limites du processeur doit être réalisée pour remplir une condition.

5. Système de mise en marche selon l'une des revendications 1 à 4, caractérisé en ce que le logiciel d'application peut lui aussi définir sa mise en marche à l'aide des tables.

6. Système de mise en marche d'un système en temps réel selon l'une des revendications 1 à 5, caractérisé en ce que les tables définissent la mise en marche en définissant, d'une part, des états de système (SP) selon un ordre prédéfini et, d'autre part, des actions qui doivent être exécutées après avoir atteint un état de système particulier.

7. Système de mise en marche d'un système en temps réel selon l'une des revendications 1 à 6, caractérisé en ce que les tables définissent des états de système en définissant des conditions (condition, contribution), un état de système étant réputé atteint lorsque les conditions sont remplies.

8. Procédé pour définir la mise en marche d'un système informatique, consistant
- à déclarer dans un composant logiciel du pool de composants du système informatique, au moment de leur conception, des relations de mise en marche pour intégrer le composant logiciel dans la mise en marche globale du système informatique,
- à générer hors ligne, à partir des composants logiciels sélectionnés parmi le pool de composants pour un système de programmes d'application personnalisé du système en temps réel, une table de mise en marche qui définit la mise en marche globale du système en temps réel et est utilisée en ligne, par des programmes de commande de mise en marche, pour commander la mise en marche.
